# EUROPEAN PATENT APPLICATION

(11) **EP 4 024 883 A1**
(43) Date of publication of application: **06.07.2022**
(21) Application number: 20856793.3
(22) Date of filing: 14.07.2020
(51) Int. Cl.: H04Q 11/00

(54) **CHANNEL SWITCHING METHOD, APPARATUS AND SYSTEM, AND STORAGE MEDIUM**

(30) Priority: 29.08.2019 CN 201910810985
(71) Applicant: ZTE Corporation, Shenzhen, Guangdong 518057 (CN)
(72) Inventor: QIU, Yanbin, Shenzhen, Guangdong 518057 (CN); CAI, Liyong, Shenzhen, Guangdong 518057 (CN)
(74) Representative: Petraz, Gilberto Luigi
(86) International application number: PCT/CN2020/101811
(87) International publication number: WO 2021/036552

(57) **Abstract**

Disclosed are a channel switching method, apparatus and system, and a storage medium. The method comprises: an ONU sending a first SN registration message to an OLT via an initial OAM channel, wherein the first SN registration message is used for instructing the OLT to determine a channel switching policy of the ONU according to hardware rate information corresponding to the initial OAM channel, and bandwidth occupancy information of each channel; the ONU receiving a first response message sent by the OLT, wherein the first response message carries the channel switching policy of the ONU; and the ONU performing channel switching according to the channel switching policy.

## Description

This application claims the priority of Chinese patent application No. 201910810985.7, filed on August 29, 2019, entitled "Channel switching method, apparatus and system, and storage medium", which is incorporated herein by reference in its entirety.

### Field of the Invention

The disclosure relates to the field of communications, and in particular to a channel switching method, apparatus and system, and a storage medium.

### Background of the Invention

With the development of new technologies and new applications such as 4K/8K high-definition video and smart cities, the broadband industry is experiencing a new round of acceleration. In a 40 Gigabit-capable passive optical network (40NG-PON2), an implementation method for improving the bandwidth of a passive optical network (PON) system via wavelength division multiplexing is added, where a symmetric 40G-bandwidth of the PON system can be realized by way of combining four wavelength channels into one. However, for an optical network unit (ONU), the largest bandwidth remains symmetric 10G, which still cannot satisfy the explosive growth of users' demands for the network bandwidth. Therefore, a higher requirement is imposed on the bandwidth of the PON system, and thus a 100G PON emerges as the times require.

In recent years, ONUs supporting multiple rates, namely, 25G, 50G and 100G, in a 100G PON system have developed rapidly. Due to the coexistence of the ONUs supporting multiple rates, the service bearing capability of the 100G PON system will grow exponentially, and a traditional fixed-channel bonding method of a 100G PON in which ONUs supporting multiple rates coexist has had difficulty in adapting to the current situation where a requirement of an existing 100G PON system for a utilization rate of channel bandwidth gradually increases.

In the case that service bandwidth and channels in the 100G PON system are limited, the 100G PON system cannot dynamically perform channel management, and there is still no effective solution for such a problem.

### Summary of the Invention

The disclosure provides a channel switching method, apparatus and system, and a storage medium, which are used for solving the problem in the related art of a 100G PON system being incapable of dynamically performing channel management.

In order to solve the above-mentioned technical problem, in a first aspect, an embodiment of the disclosure provides a channel switching method, including: sending, by an ONU, a first serial number (SN) registration message to an optical line terminal (OLT) through an initial operation administration and maintenance (OAM) channel, where the first SN registration message is used for instructing the OLT to determine a channel switching policy for the ONU according to hardware rate information corresponding to the initial OAM channel, and bandwidth occupancy information of each channel; receiving a first response message sent by the OLT, where the first response message carries the channel switching policy for the ONU; and performing channel switching according the channel switching policy.

In a second aspect, an embodiment of the disclosure provides a channel switching method, including: receiving, by an OLT a first SN registration message sent by an ONU through an initial OAM channel; determining a channel switching policy for the ONU according to hardware rate information corresponding to the initial OAM channel, and bandwidth information of each channel; and sending a first response message to the ONU, where the first response message carries the channel switching policy for the ONU, and the channel switching policy is used for instructing the ONU to perform channel switching according to the channel switching policy.

In a third aspect, an embodiment of the disclosure further provides a channel switching system, which may include an ONU and an OLT. The ONU may send a first SN registration message to the OLT through an initial OAM channel, and the OLT may determine a channel switching policy for the ONU according to hardware rate information corresponding to the initial OAM channel, and bandwidth occupancy information of each channel. The OLT may send a first response message to the ONU, where the first response message carries the channel switching policy for the ONU. The ONU may perform channel switching according to the channel switching policy.

In a fourth aspect, an embodiment of the disclosure provides a channel switching apparatus, which may include a processor, a memory and a communication bus. The communication bus may be configured to implement connection communication between the processor and the memory. The processor may be configured to execute one or more programs stored in the memory, so as to implement the steps of the channel switching method of any one of claims 1 to 4, or the processor may be configured to execute one or more programs stored in the memory, so as to implement the steps of the channel switching method of any one of claims 5 to 8.

In a fifth aspect, an embodiment of the disclosure further provides a storage medium. The storage medium may store at least one of a first channel switching program and a second channel switching program. The first channel switching program may be executed by one or more of processors, so as to implement the steps of the channel switching method of any one of claims 1 to 4. The second channel switching program may be executed by one or more of processors, so as to implement the steps of the channel switching method of any one of claims 5 to 8.

### Brief Description of the Drawings

The accompanying drawings are used to provide a further understanding of the technical solutions of the present disclosure and constitute a part of the description, and are used together with the embodiments of the disclosure to explain the technical solutions of the disclosure and do not constitute a limitation to the technical solutions of the disclosure.
Fig. 1 is a schematic diagram of the procedure of a channel switching method in a first embodiment of the disclosure;
Fig. 2 is an Example I of a channel switching solution in the first embodiment of the disclosure;
Fig. 3 is an Example II of a channel switching solution in the first embodiment of the disclosure;
Fig. 4 is an Example III of a channel switching solution in the first embodiment of the disclosure;
Fig. 5 is a schematic diagram of the procedure of another channel switching method in a second embodiment of the disclosure;
Fig. 6 is a structural diagram of a Burst-Profile message in the second embodiment of the disclosure;
Fig. 7 is a diagram of the correlation between a byte 40 in the Burst-Profile message and an OLT channel in the second embodiment of the disclosure;
Fig. 8 is an architectural diagram of a channel switching system in a third embodiment of the disclosure; and
Fig. 9 is an architectural diagram of an channel switching apparatus in a fourth embodiment of the disclosure.

### Detailed Description of the Embodiments

In order to make the objectives, technical solutions and advantages of the present disclosure clearer, the embodiments of the disclosure are further illustrated in details below in conjunction with the accompanying drawings. It should be noted that the embodiments in the disclosure and the features in the embodiments can be combined arbitrarily with each other as long as there is no conflict.

The steps shown in the flowcharts of the accompanying drawings can be implemented in a computer system, such as a group of computer-executable instructions. Although the flowcharts show a logical sequence, in some cases, the steps that have been shown or described can be implemented in a sequence different from this sequence.

During compatible registration of ONUs supporting multiple rates such as 25G, 50G and 100G in a related technique, a traditional multi-rate ONU coexistence apparatus in a 100G PON uses a physical layer operations administration and maintenance (PLOAM) message to report ONU rate information to an OLT, and the OLT performs channel management and bandwidth allocation on the ONU in a fixed-channel bonding manner. The PLOAM message for reporting the ONU rate information needs field extension based on a related SN registration message to represent the ONU rate information, and the reporting process needs three stages of recognition, filling and reporting. The process is complex, which affects the time a user takes to get online. With regard to the fixed-channel bonding manner, since channels are fixed, the OLT cannot dynamically allocate bandwidth to other channels, which may easily cause nonuniformity of the bandwidth allocation to data channels, in which case that bandwidth allocated to some channels has reached the maximum 25G, whereas bandwidth allocated to some channels is very small. This problem of nonuniformity of the bandwidth allocation due to fixed-channel bonding will finally result in a low bandwidth utilization rate of a 100G PON system, and the performance of the 100G PON will be severely affected.

### Embodiment One

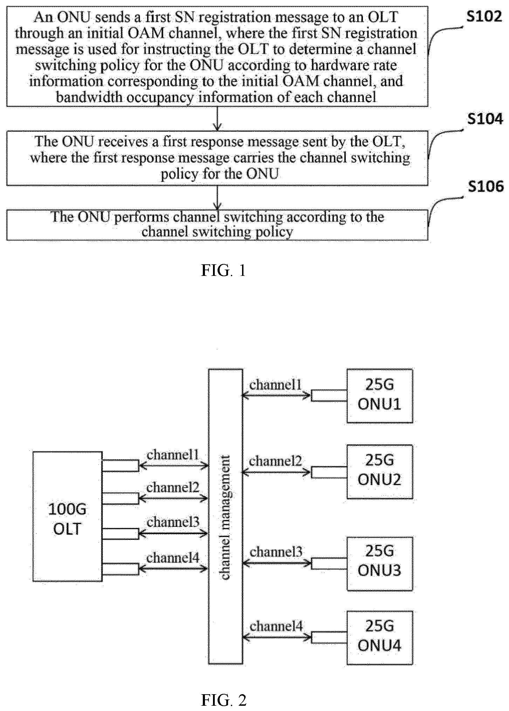

The first embodiment of the disclosure provides a channel switching method, and the procedure of the method is as shown in Fig. 1, including steps S102 to S106.

At step S102, an ONU sends a first SN registration message to an OLT through an initial OAM channel, where the first SN registration message is used for instructing the OLT to determine a channel switching policy for the ONU according to hardware rate information corresponding to the initial OAM channel, and bandwidth occupancy information of each channel. In the embodiment, the initial OAM channel includes at least one of the following scenes: when the ONU is a 25G ONU, the initial OAM channel is a first channel; when the ONU is a 50G ONU, the initial OAM channel is a second channel; and when the ONU is a 100G ONU, the initial OAM channel is a third channel.

The ONU is powered on and started to acquire the hardware rate information and save it locally. The ONU activates a corresponding OAM channel according to the hardware rate information and an initial OAM channel bonding solution. At the earlier stage of registration, the OLT recognizes the hardware rate information of the ONU by using the first SN registration message reported through the preset initial OAM channel. The specific presetting solution for the initial OAM channel involves the following implementations. 1) When the 25G ONU is started, according to the hardware rate information, OAM interaction at the earlier stage needs to be performed on a channel 1 (i.e., the first channel), so that SN registration message interaction at the earlier stage of channel switching can be performed on the channel 1. When the reporting of the SN registration message is completed, the OLT obtains the hardware rate information of the ONU and vendor-specific serial number (VSSN) information, and then the OLT will issue the channel switching policy. The ONU performs channel switching, so as to initiate registration again on a new channel. 2) When the 50G ONU is started, according to the rate information, OAM interaction at the earlier stage needs to be performed on a channel 2 (i.e., the second channel), so that SN registration message interaction at the earlier stage of channel switching can be performed on the channel 2. When the reporting of the SN registration message is completed, the OLT obtains the hardware rate information of the ONU and VSSN information, and then the OLT will issue the channel switching policy. The ONU performs channel switching, so as to initiate registration again on a new channel. 3) When the 100G ONU is started, according to the rate information, OAM interaction at the earlier stage needs to be performed on a channel 3 (i.e., the third channel), so that SN registration message interaction at the earlier stage of channel switching can be performed on the channel 3. When the reporting of the SN registration message is completed, the OLT obtains the hardware rate information of the ONU and VSSN information, and then the OLT will issue the channel switching policy. The ONU performs channel switching, so as to initiate registration again on a new channel.

In the embodiment, when the ONU is started, OAM channel bonding is performed according to the above initial OAM channel bonding solution. This OAM fixed-channel bonding approach here is merely a process for transferring ONU hardware rate information and SN registration information. It does not represent a final bonding method of an OAM channel and a service channel, and the final OAM channel bonding and service channel bonding are determined by the OLT according to the channel switching policy information carried by the Burst_Profile, and the VSSN information.

At step S104, a first response message sent by the OLT is received, where the first response message carries the channel switching policy for the ONU. In the embodiment, the first response message may be a Burst_Profile message, where the Burst_Profile message includes the hardware rate information of the ONU and the VSSN information for recognizing the ONU

The OLT receives the SN registration message over the initial OAM channel, the hardware rate information of the ONU can be parsed according to the initial OAM channel, and the OLT performs rational calculation of a dynamic channel switching solution according to a bandwidth occupancy situation of each channel.

Several implementations of a 100G OLT dynamic channel switching solution are listed below in conjunction with the accompanying drawings.
1) Fig. 2 illustrates Example I of a channel switching solution in the first embodiment of the disclosure. As shown in Fig. 2, when a 25G ONU 1 operates on a channel 1 and occupies a relatively large bandwidth of the channel 1, with four coexisting 25G ONUs, since the 25G ONU 1 occupies a relatively large bandwidth of the channel 1, after the other three 25G ONUs report hardware rate information through an initial OAM channel, an OLT recognizes that it is a scene where a plurality of 25G ONUs coexist. At this time, the OLT may also be a channel management module arranged inside or outside the OLT in an optional embodiment, and may notify, via the Burst _Profile message, the other three ONUs to perform channel switching, i.e., a 25G ONU 2 operates on a channel 2, a 25G ONU 3 operates on channel 3, and a 25G ONU 4 operates on channel 4.

In the Embodiment One, when only the ONU 1 operates on the channel 1 and the ONU 2 accesses the OLT, at an SN registration message interaction stage, the OLT parses, according to an SN registration message, that the ONU 2 is a 25G ONU. In order to satisfy the maximum bandwidth for a single ONU, the OLT issues a Burst _Profile message to notify the ONU 2 to switch to the channel 2, so as to avoid sharing of the channel 1 with the ONU 1. After receiving the Burst_Profile message, the ONU 2 switches to the channel 2, and re-initiates SN registration message interaction. After receiving the SN registration message, the OLT determines that the ONU 1 and the ONU 2 are not on the same channel, and thus allows the ONU 2 to get online and then operate on the channel 2.

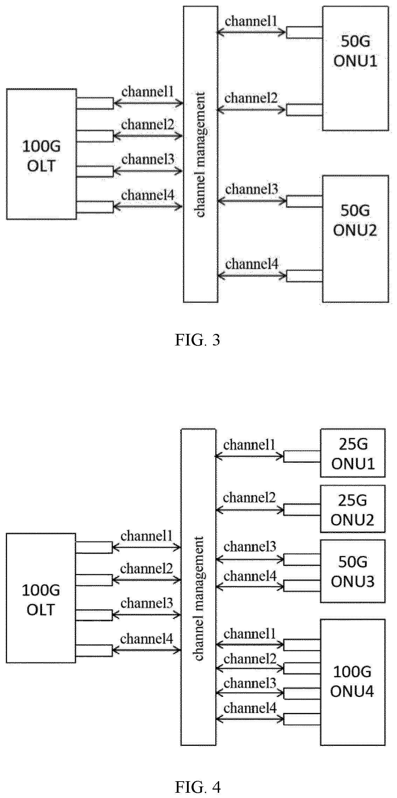

3) Fig. 3 illustrates Example II of a channel switching solution in the first embodiment of the disclosure. Here, Fig. 3 shows a dynamic channel switching solution when a 50G ONU 1 operates on a channel 1 and a channel 2 and occupies a relatively large bandwidth of the channel 1 and the channel 2, with two 50G ONUs coexisting.

For a scene where a plurality of 50G ONUs coexist, a 50G ONU operates on two channels, and the channels are not fixed and can be dynamically switched, that is, the 50G ONU can operate on any two channels among channels 1-4. Specifically, the channels are controlled by an OLT, which is a 100G OLT in this scene. In an optional embodiment, the channels can also be controlled by a channel management module arranged inside or outside the OLT.

When only the 50G ONU 1 operates on the channels 1 and 2 and occupies a relatively large bandwidth of the channels 1 and 2, and the ONU 2 accesses the OLT, at an SN registration message interaction stage, the OLT parses, according to an SN registration message, that the ONU 2 is a 50G ONU. In order to satisfy the maximum bandwidth for a single ONU, the OLT issues a Burst_Profile message to notify the ONU 2 to switch to the channels 3 and 4, so as to avoid sharing of the channels 1 and 2 with the ONU 1. After receiving the Burst_Profile message, the ONU 2 switches to the channels 3 and 4, and re-initiates SN registration message interaction. After receiving the SN registration message, the OLT determines that the ONU 1 and the ONU 2 are not on the same channel, and thus allows the ONU 2 to get online and then operate on the channels 3 and 4.

3) Fig. 4 illustrates Example III of a channel switching solution in the first embodiment of the disclosure. Here, Fig. 4 shows a dynamic channel switching solution when a 100G ONU 4 operates on a channel 1, a channel 2, a channel 3 and a channel 4 and occupies a relatively large bandwidth of the channels 1, 2, 3 and 4, with ONUs coexisting, which respectively support 25G, 50G and 100G.

Since the 100G ONU 4 occupies four channels and occupies a relatively large uplink bandwidth, when a 25G ONU 1 access, an OLT, which is a 100G OLT in this scene, may also be a channel management module arranged inside or outside the OLT in an optional embodiment. The OLT parses, according to an SN registration message, that the ONU 1 is a 25G ONU, and issues a Burst_Profile message to notify the ONU 1 to switch to channel 1. After receiving the Burst_Profile message, the ONU 1 switches to the channel 1, and re-initiates SN registration message interaction. After receiving the SN registration message, the OLT allows the ONU 1 to get online and then operate on the channel 1.

When a 25G ONU 2 accesses, the OLT parses, according to the SN registration message, that the ONU 2 is a 25G ONU. Since there has been the 25G ONU 1 operating on the channel 1 and the 25G ONU 1 and the 100G ONU 4 share the channel 1, in order to satisfy the maximum bandwidth for a single ONU, the OLT issues a Burst_Profile message to notify the ONU 2 to switch to a channel 2, and allows the ONU 2 to operate on the channel 2.

When a 50G ONU 3 accesses, at an SN registration message interaction stage, the OLT parses, according to rate information in the SN registration message, that the ONU 3 is a 25G ONU. Since the channels 1 and 2 have been shared by the 25G ONU 1, the 25G ONU 2 and the 100G ONU 4 and the remaining bandwidth is critical, in order to satisfy the maximum bandwidth for the newly accessing ONU 3, the OLT issues a Burst_Profile message to notify the ONU 3 to switch to the channels 3 and 4. After receiving the Burst_Profile message, the ONU 3 switches to the channels 3 and 4, and re-initiates SN registration. After receiving the SN, the OLT determines that the ONU 3 is not on the same channel as the ONU 1 and the ONU 2, and thus allows the ONU 3 to get online and then operate on the channels 3 and 4. The 100G ONU operates on four channels, and the channels are fixed.

At step S106, channel switching is performed according to the channel switching policy.

In the embodiment, after channel switching, the method further includes the following steps. A second SN registration message is sent to the OLT through an switched OAM channel, and a second response message of the OLT is received, where the second response message carries an authorization message for allowing the ONU to perform data transmission on the switched OAM channel.

In the channel switching method of the embodiment, the OLT performs ONU rate recognition according to the first SN registration message from a preset original OAM channel, without the need to extend the reported first SN registration message, thereby simplifying an ONU rate reporting process. Moreover, in the method, the OLT adopts a dynamic channel variable method for optimal bandwidth allocation according to a bandwidth occupancy situation, issuing a channel bonding policy for an ONU, VSSN information for recognizing the ONU and hardware rate information of the ONU to the ONU via a Burst_Profile message. The ONU selects, according to the VSSN information and the hardware rate information, a Burst_Profile message that meets a requirement of the ONU, and performs channel switching according to the hardware rate information in the Burst_Profile message. The ONU performs data interaction over a channel that is successfully switched to.

By the channel switching method provided by the embodiment, a 100G PON can support compatible registration of ONUs supporting multiple rates, and an ONU rate reporting procedure is also simplified. A rational dynamic channel management method is adopted to achieve fine-grained control over bandwidth allocation to channels, rationally allocating service bandwidth to an idle channel or a channel having a relatively small channel occupancy ratio, thereby avoiding service congestion of the same channel, and thus improving the performance of the 100G PON system.

### Embodiment Two

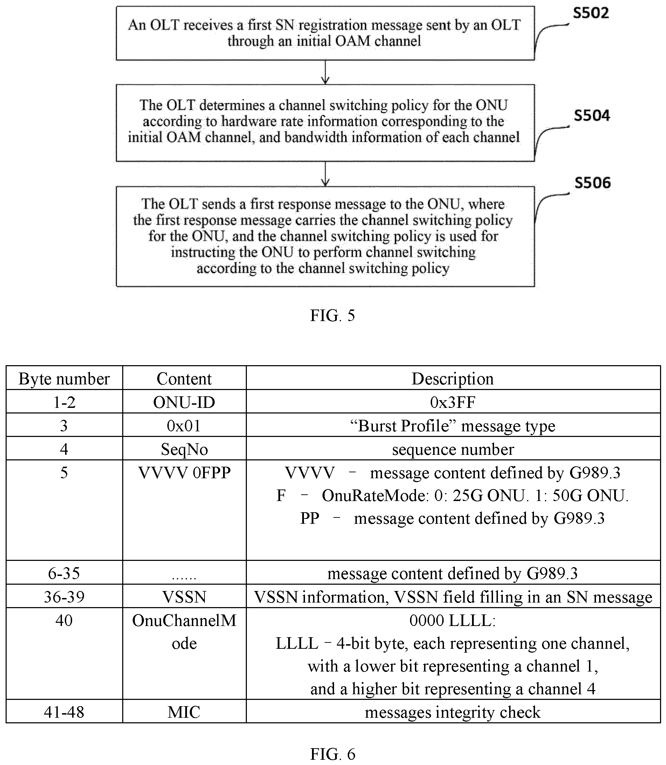

A second embodiment of the disclosure provides another channel switching method. Fig. 5 is a schematic diagram of the procedure of the another channel switching method in the second embodiment of the disclosure. As shown in Fig. 5, the channel switching method includes the following steps.

At step S502, an OLT receives a first SN registration message sent by an ONU through an initial OAM channel. The initial OAM channel includes the following three scenes: when the ONU is a 25G ONU, the initial OAM channel is a first channel; when the ONU is a 50G ONU, the initial OAM channel is a second channel; and when the ONU is a 100G ONU, the initial OAM channel is a third channel.

By way of initial OAM channel bonding, the ONU enables the OLT to learn a rate mode of the ONU, so as to solve the problem of the 100G PON system being compatible with 25G/50G PON ONUs. By using this compatibility mode, the 100G PON system being compatible with 25G/50G ONUs at the earlier stage of deployment can be ensured, and the subsequent upgrade to a 100G ONU is also facilitated. The implementation in which a 100G PON system is compatible with 25G/50G ONUs can facilitate the deployment and smooth upgrade of the 100G PON system.

At step S504, a channel switching policy for the ONU is determined according to hardware rate information corresponding to the initial OAM channel, and bandwidth information of each channel. The OLT determines a channel switching policy for the ONU according to hardware rate information corresponding to the initial OAM channel, and bandwidth information of each channel. A number N of channels required by the ONU is then determined according to a hardware rate of the ONU. N channels having the smallest bandwidth occupancy ratio are determined according to the bandwidth occupancy information of each channel, where N is a positive integer greater than or equal to 1.

At step S506, a first response message is sent to the ONU, where the first response message carries the channel switching policy for the ONU, and the channel switching policy is used for instructing the ONU to perform channel switching according to the channel switching policy.

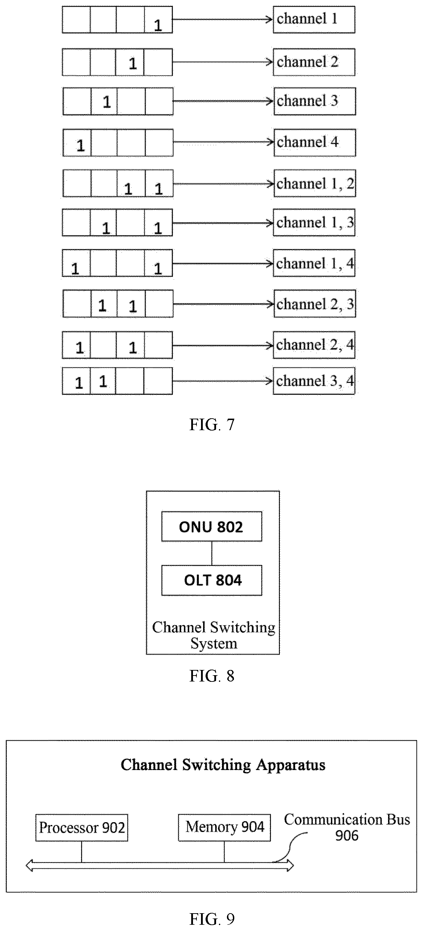

In the embodiment, the first response message may be a Burst_Profile message, where the Burst_Profile message includes the hardware rate information of the ONU and the VSSN information for recognizing the ONU. Fig. 6 is a structural diagram of a Burst-Profile message in the second embodiment of the disclosure. As shown in Fig. 6, the message structure is defined as follows. Byte numbers 1 and 2: ONU-ID, which is used for recognizing an ONU; and 0x3FF, which is used for identifying a unregistered ONU Byte number 3: a message ID, which is defined by a standard PLOAM message, and which is used for identifying a message type. A standard stipulates that the message ID of an uplink Burst_Profile message is 0x01. Byte number 4: a sequence number (SeqNo). Byte number 5: VVVV and PP. Message content of these fields is filled according to the stipulation of standard G989.3. F refers to a rate mode field (ONURateMode), 0x0 represents a 25G ONU, and 0x1 represents 50G ONU. Byte numbers 6 to 35: Burst Profile message content stipulated by G989.3. The content of these fields is filled according to the stipulation of a standard. Byte numbers 36 to 39: VSSN information, which is VSSN field filling in the SN message, and which is used for representing the VSSN information of a reported ONU. Byte number 40: OLT channel information, which includes an ONU channel mode message (i.e., OnuChannelMode). 0000LLLL has four bits, each representing one channel, with a lower bit representing the channel 1, and a higher bit representing the channel 4. Fig. 7 will explain this field in details. Byte numbers 41 to 48: messages integrity check (MIC), which is a messages integrity check field, and which is calculated and filled according to requirements of a standard.

In the Embodiment Two, the 100G ONU occupies four channels at the same time, and does not parse bytes 5 and 40 in the Burst_Profile message, and therefore, rate modes in a fifth byte only include two modes of 25G and 50G. Bytes 36 to 39 are VSSN reported according to the SN registration message of the ONU, and these fields can enable the OLT to make channel bonding accurate to a single ONU. Fig. 7 is a diagram of the correlation between a byte 40 in the Burst-Profile message and an OLT channel in the second embodiment of the disclosure. 0000LLLL has four bits, each representing one channel, with a lower bit representing the channel 1, and a higher bit representing the channel 4. For example, 0001 represents the channel 1; 0010 represents the channel 2; 0100 represents the channel 3; 1000 represents the channel 4; 0011 represents the channels 1 and 2; 0101 represents the channels 1 and 3; 1001 represents the channels 1 and 4; 0110 represents the channels 2 and 3; 1010 represents the channels 2 and 4; and 1100 represents the channels 3 and 4.

With regard to the Burst_Profile message disclosed in the embodiment, a field F in the byte 5 is mainly modified to represent ONU hardware rate information, VSSN information in the bytes 36 to 39 are added for recognizing the ONU, and the byte 40 is added for representing channel information.

The ONU screens the Burst _Profile messages issued by the OLT for different VSSN information, discarding a Burst_Profile message that does not conform to the rate information and the VSSN information of the ONU, and parsing channel information in a Burst_Profile message that conforms to the rate information and the VSSN information of the ONU, and locally saving the same.

The ONU performs channel switching according to the channel information in the Burst_Profile messages, and re-initiates registration over a new OAM channel. After a corresponding channel receives a registration request sent by the ONU, the OLT issues a corresponding response message, the message carrying an authorization message for allowing the ONU to perform data transmission over the switched OAM channel, and allowing the ONU to get online. After successful registration, the ONU performs data interaction over the corresponding channel, and no longer parses rate channel information in periodic Burst_Profile messages issued by the OLT.

In the Embodiment Two, issuing ONU channel bonding information via a Burst_Profile message as mentioned in the embodiment is merely an example made by the embodiment for clear description, rather than a limitation to the issuing of a message. On the basis of the above description, other downlink PLOAM messages in a standard 989.3 can also be used as a carrier for rate information.

### Embodiment Three

A third embodiment of the disclosure provides a channel switching system, as shown in Fig. 8, including an ONU 802 and an OLT 804. The ONU 802 sends a first SN registration message to the OLT 804 through an initial OAM channel, and the OLT determines a channel switching policy for the ONU 802 according to hardware rate information corresponding to the initial OAM channel, and bandwidth occupancy information of each channel. The OLT 804 sends a first response message to the ONU 802, where the first response message carries the channel switching policy for the ONU 802. The ONU 802 performs channel switching according to the channel switching policy.

The OLT 804 determining the channel switching policy for example includes the following steps. By the OLT 804, a hardware rate of the ONU 802 is determined according to the hardware rate information corresponding to the initial OAM channel. According to the hardware rate of the ONU 802, a number N of channels required by the ONU 802 is determined. According to the bandwidth occupancy information of each channel, N channels having the smallest bandwidth occupancy ratio are determined, where N is a positive integer greater than or equal to 1.

The implementation process for implementing the above channel switching is similar to those implementation processes for implementing channel switching in the foregoing embodiments, and details are not described herein again.

### Embodiment Four

A fourth embodiment of the disclosure provides a storage medium. The storage medium stores at least one of a first channel switching program and a second channel switching program. The first channel switching program may be executed by one or more of processors, so as to implement the steps of the channel switching method of any one of claims 1 to 4. The second channel switching program may be executed by one or more of processors, so as to implement the steps of the channel switching method of any one of claims 5 to 8.

In addition, the embodiment also provides an architecture of a channel switching apparatus, as shown in Fig. 9, including a processor 902, a memory 904 and a communication bus. The communication bus 906 is configured to implement connection communication between the processor 902 and the memory 904. The processor 902 is configured to execute one or more programs stored in the memory 904, so as to implement the steps of the channel switching method of any one of claims 1 to 4. Alternatively, the processor 902 is configured to execute one or more programs stored in the memory, so as to implement the steps of the channel switching method of any one of claims 5 to 8.

The above implementation can be understood with reference to the first, the second and the third embodiments of the disclosure, and details are not described herein again.

It can be understood that the content in the various embodiments of the disclosure can be combined with each other for use in the case of no conflict.

The solution provided by the embodiments of the disclosure overcomes the problem of a 100G PON system being unable to dynamically perform channel management when service bandwidth and channels in the system are limited, thereby significantly improving the channel bandwidth utilization rate of the 100G PON system.

Obviously, it should be understood by those skilled in the art that all or some of the steps in the method disclosed above, a system, and a function module/unit in an apparatus can be embodied in software (which can be realized by a program code that is executable by a computer apparatus), firmware, hardware and a suitable combination thereof. In the hardware implementation, the division of the function modules/units mentioned in the above description does not necessarily correspond to the division of physical assemblies. For example, one physical assembly can have a plurality of functions, or one function or step can be executed by several physical assemblies in cooperation. Some or all of the assemblies can be embodied in software that is executable by a processor, such as a central processing unit, a digital signal processor or a microprocessor, or be embodied in hardware, or be embodied in an integrated circuit, such as an application specific integrated circuit. Such software can be distributed on a computer-readable storage medium and be executed by a computing apparatus. In some cases, the steps shown or described may be performed in a sequence different from the sequence described herein. The computer-readable storage medium can include a computer storage medium (or a non-transitory medium) and a communication medium (or a transitory medium). As known to those ordinary skilled in the art, the term "computer storage medium" includes volatile and non-volatile, removable and non-removable media implemented in any method or technology for storing information such as computer-readable instructions, data structures, program modules, or other data. The computer storage medium includes, but not limited to an RAM, an ROM, an EEPROM, a flash memory or other storage techniques, a CD-ROM, a digital versatile disc (DVD) or other optical disc memory, a cassette tape, tape or disc memory or other magnetic storage, or any other medium that can be used to store desired information and that can be accessed by a computer. In addition, it is well known to those ordinary skilled in the art that a communication medium generally contains computer-readable instructions, data structures, program modules or other data in a modulated data signal such as a carrier or other transmission mechanisms, and can include any information transfer medium. Therefore, the disclosure is not limited to any specific combination of hardware and software.

The above content are further descriptions made for the embodiments of the disclosure in conjunction with particular embodiments, and it should not be interpreted that the particular embodiments of the disclosure are only limited to these descriptions. For those ordinary skilled in the art to which the disclosure belongs, without departing from the concept of the disclosure, several simple deductions or replacements can be made, which should all be regarded as falling within the scope of protection of the disclosure.

## Claims

1. A channel switching method, comprising:
sending, by an optical network unit, ONU, a first serial number, SN, registration message to an optical line terminal, OLT, through an initial operation administration and maintenance, OAM, channel, wherein the first SN registration message is used for instructing the OLT to determine a channel switching policy for the ONU according to hardware rate information corresponding to the initial OAM channel, and bandwidth occupancy information of each channel;
receiving, by the ONU, a first response message sent by the OLT, wherein the first response message carries the channel switching policy for the ONU; and
performing, by the ONU, channel switching according to the channel switching policy.

2. The method of claim 1, wherein the initial OAM channel comprises one of the following scenes:
when the ONU is a 25G ONU, the initial OAM channel is a first channel;
when the ONU is a 50G ONU, the initial OAM channel is a second channel; and
when the ONU is a 100G ONU, the initial OAM channel is a third channel.

3. The method of claim 1, wherein after the ONU performs channel switching according to the channel switching policy, the method further comprises:
sending, by the ONU, a second SN registration message to the OLT through a switched OAM channel, and
receiving, by the ONU, a second response message from the OLT, wherein the second response message carries an authorization message for allowing the ONU to perform data transmission on the switched OAM channel.

4. The method of claim 1, wherein the first response message is a Burst_Profile message, and wherein the Burst_Profile message comprises hardware rate information of the ONU and vendor-specific serial number, VSSN, information for recognizing the ONU

5. A channel switching method, comprising:
receiving, by an optical line terminal, OLT, a first serial number, SN, registration message sent by an optical line terminal, OLT, through an initial operation administration and maintenance, OAM, channel;
determining, by the OLT, a channel switching policy for the ONU according to hardware rate information corresponding to the initial OAM channel, and bandwidth information of each channel; and
sending, by the OLT, a first response message to the ONU, wherein the first response message carries the channel switching policy for the ONU, and wherein the channel switching policy is used for instructing the ONU to perform channel switching according to the channel switching policy.

6. The method of claim 5, wherein the initial OAM channel comprises one of the following scenes:
when the ONU is a 25G ONU, the initial OAM channel is a first channel;
when the ONU is a 50G ONU, the initial OAM channel is a second channel; and
when the ONU is a 100G ONU, the initial OAM channel is a third channel.

7. The method of claim 5, wherein the method further comprises:
receiving, by the OLT, a second SN registration message sent by the ONU through a switched OAM channel; and
sending, by the OLT, a second response message to the ONU, wherein the second response message carries an authorization message for allowing the ONU to perform data transmission on the switched OAM channel.

8. The method of claim 5, wherein the OLT determining the channel switching policy for the ONU according to hardware rate information corresponding to the initial OAM channel, and bandwidth information of each channel comprises:
determining, by the OLT, a hardware rate of the ONU according to the hardware rate information corresponding to the initial OAM channel;
determining, by the OLT and according to the hardware rate of the ONU, a number N of channels required by the ONU; and
determining, by the OLT and according to the bandwidth occupancy information of each channel, N channels having the smallest bandwidth occupancy ratio, wherein N is a positive integer greater than or equal to 1.

9. A channel switching system, comprising an optical network unit, ONU, and an optical line terminal, OLT, wherein
the ONU sends a first serial number, SN, registration message to the OLT through an initial operation administration and maintenance, OAM, channel, and the OLT determines a channel switching policy for the ONU according to hardware rate information corresponding to the initial OAM channel, and bandwidth occupancy information of each channel;
the OLT sends a first response message to the ONU, wherein the first response message carries the channel switching policy for the ONU; and
the ONU performs channel switching according to the channel switching policy.

10. The system of claim 9, wherein the OLT determining the channel switching policy for the ONU according to hardware rate information corresponding to the initial OAM channel, and bandwidth information of each channel comprises:
the OLT determining, according to the hardware rate information corresponding to the initial OAM channel, a hardware rate of the ONU;
the OLT determining, according to the hardware rate of the ONU, a number N of channels required by the ONU; and
the OLT determining, according to the bandwidth occupancy information of each channel, N channels having the smallest bandwidth occupancy ratio, wherein N is a positive integer greater than or equal to 1.

11. A channel switching apparatus, which comprises a processor, a memory and a communication bus, wherein
the communication bus is configured to implement connection communication between the processor and the memory; and
the processor is configured to execute one or more programs stored in the memory, so as to implement the steps of the channel switching method of any one of claims 1 to 4, or
the processor is configured to execute one or more programs stored in the memory, so as to implement the steps of the channel switching method of any one of claims 5 to 8.

12. A storage medium, which stores at least one of a first channel switching program and a second channel switching program, wherein the first channel switching program is executable by one or more of processors, so as to implement the steps of the channel switching method of any one of claims 1 to 4, and the second channel switching program is executable by one or more of processors, so as to implement the steps of the channel switching method of any one of claims 5 to 8.
